# EUROPEAN PATENT APPLICATION

(11) **EP 4 403 340 A1**
(43) Date of publication of application: **24.07.2024**
(21) Application number: 23152272.3
(22) Date of filing: 18.01.2023
(51) Int. Cl.: B29C 70/34, B29C 33/10, B29C 43/36, B29C 45/37, B29C 51/10, B29C 70/44, B29C 70/46, B29C 70/54, B29B 11/16, B29C 33/00, B29C 31/08, B25J 15/06, B29C 33/30, B29D 99/00, B29L 31/08

(54) **METHOD FOR MANUFACTURING A PREFORM ELEMENT FOR A BLADE FOR A WIND TURBINE, PREFORM ELEMENT, BLADE, WIND TURBINE, UPPER MOLD AND MOLD ARRANGEMENT CONSISTING OF AN UPPER AND A LOWER MOLD**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Method for manufacturing at least one preform element (7) for a blade (2) for a wind turbine (1), wherein a mat-like preform component (19) with a curable binding agent or a stack (22) with at least one mat-like preform component (19) with a curable binding agent is arranged in at least one vacuum bag (32, 41) which is arranged in a shape-giving cavity (29), wherein the cavity (29) is constituted by a lower mold surface (15) of a lower mold (12) and an upper mold surface (27) of an upper mold (26), wherein a bag vacuum is established in the vacuum bag (32, 41) and a holding vacuum is established between the vacuum bag (32, 41) and the upper mold surface (27), wherein the upper mold (26) and the at least one vacuum bag (32, 41) which is held to the upper mold (26) by the holding vacuum are lifted away from the lower mold (12), wherein the at least one preform component (19) is cured by activating the binding agent to conserve its shape.

## Description

The present invention relates to a method for manufacturing at least one preform element for a blade for a wind turbine.

Wind turbines usually comprise a rotor with a plurality of rotor blades, generally for converting wind energy into electrical energy by means of a generator. Due to the enormous size of wind turbine blades, their manufacturing is a major challenge for manufacturers of wind turbines.

One technology for facilitating the fabrication of wind turbine blades is the usage of preform building elements or preform elements, respectively. Preform elements are preformed parts or segments of the blade which are used for building the final blade. In many cases, preform elements constitute an outer or an inner skin of the blade. For fabricating the blade, several preform elements and particularly other components of the blade like beams are arranged in a blade half molds. After two blade half molds have been closed, the preform elements and particularly the other components are attached to each other by, e.g., gluing and/or infusing resin.

The preform element may be fabricated in a mold used for arranging and attaching the components of the preform element to each other. The preform element may comprise a plurality of preform components which are often layers, particularly fiber mats or sheets, and/or core materials. The core material may be a rigid or stiff component consisting of, e.g., balsa wood or a plastic material. In many cases, preform elements are manufactured separately and independently from each other. A possibility for manufacturing a preform element is to place preform components on a lower mold surface of a lower mold. The resulting stack of preform components is arranged in a sealed vacuum bag. Thereafter, a vacuum is established between the lower mold surface and the vacuum bag and within the vacuum bag such that the shape of the stack adapts to the shape of the lower mold surface. However, there is the problem that also the shape of the upper part of the stack is only defined by the lower mold surface, wherein typically several layers are arranged between these two surfaces. This may cause problems with respect to the resulting shape of the upper part of the stack. Another problem is that after the shape giving process, the preform element has to be lifted away from the lower mold and must often be rotated about its longitudinal axis. This complicates the manufacturing process.

It is an object of the present invention to provide an enhanced concept for manufacturing a preform element for a blade of a wind turbine, particularly with respect to the addressed issues.

According to the present invention, this problem is solved by a method as initially described, wherein a mat-like preform component with a curable binding agent or a stack with at least one mat-like preform component with a curable binding agent is arranged in at least one vacuum bag which is arranged in a shape-giving cavity , wherein the cavity is constituted by a lower mold surface of a lower mold and an upper mold surface of an upper mold, wherein a bag vacuum is established in the vacuum bag and a holding vacuum is established between the vacuum bag and the upper mold surface, wherein the upper mold and the at least one vacuum bag which is held to the upper mold by the holding vacuum are lifted away from the lower mold, wherein the at least one preform component is cured by activating the binding agent to conserve its shape.

The invention is based on the idea that the cavity is realized by two closed mold surfaces which, hence, act as means to define the shape of the preform element. The molds and the respective mold surfaces comprise are rigid structure such that the shape of the preform component or of the stack adapts to the shape of mold surfaces on its upper and lower side. To realize the shape-giving process, also the vacuum bag is flexible in shape. As a consequence, the geometry of the preform element is defined by the shape of the cavity and, hence, of the molding surfaces and not only by the shape of a single mold surface on which the preform component or the stack is arranged. Regarding the cross-sectional plane perpendicular to the longitudinal elongation of the preform element, the cavity is closed with respect to all directions. However, before the vacuums are established, there can be a gap between the molding surfaces. Since the height of the preform element or of the stack typically decreases when the vacuums are established, during this step the two molds can move towards each other, particularly by an external force, such that the gap closes.

Moreover, the invention is based on the idea that the upper mold is not only used as a shape giving means but also as a means for lifting the vacuum bag together with the component(s) therein away from the lower mold. Preferably, the vacuum bag and the respective component(s) therein are arranged in the cavity such that the respective rotational position regarding the longitudinal axis is already the position which is required when positioning the final preform element on the blade half mold. This simplifies the handling of the respective preform element and, hence, the further manufacturing process for the final blade.

Regarding a possible order of the steps of the method according to the invention, as a first step, the preform component(s) and component(s) realizing the vacuum bag can be arranged on the lower mold surface. The components which realize the vacuum bag can be sealed to each other to achieve an airtight interior of the vacuum bag where the preform component or the stack is arranged. Next, the upper mold can be arranged on the vacuum bag to close the cavity. The vacuum bag or at least one component of the vacuum bag can be sealed to the upper mold to achieve an airtight region between the vacuum bag and the upper mold surface. Next, air can be removed from the interior of the vacuum bag to realize the bag vacuum and from the region between the vacuum bag and the upper mold to realize the holding vacuum. The bag vacuum and the holding vacuum can be established at the same time or subsequently. The vacuums cause the component(s) within the air bag to adapt the shape of the cavity. Moreover, the holding vacuum is sufficient to carry the weight of the preform component(s) and the vacuum bag. In the next step, when the upper mold is lifted, the preform component(s) and the vacuum bag remain in the respective position on the upper mold and are lifted away from the lower mold together with the upper mold.

Next, the binding agent can be activated. The binding agent can be activated while the preform component(s) and the vacuum bag is still hold by the upper mold by the respective vacuum. In this embodiment, the upper mold can comprise heating means to heat the preform component(s) and to activate the binding agent. Another option is that, after lifting the upper mold and the preform component(s) away from the lower mold, the preform component(s) are released from the upper mold and the binding agent is activated after this, i.e., while not being attached to the upper mold any more. In this embodiment, the upper mold does not have to withstand the activation temperature of the binding agent.

The preform component is mat-like and flexible in shape. This means that the preform component comprises or consists of at least one flexible and flat layer which can be made of a fiber sheet which particularly comprises of glass-, carbon- and/or aramid fibers. The fiber sheet can comprise a fabric or textile structure.

In an embodiment of the present invention only one preform component which constitutes the resulting preform element is arranged in the vacuum bag. In another embodiment, the stack comprising several layers is arranged in the vacuum bag such that the resulting preform element has a laminated structure. The stack comprises several layers which can be realized by one or several preform components and particularly by at least one element to realize at least one rigid layer. This element, which particularly realizes a core of the preform element, can be made of balsa wood or a plastic material.

The binding agent acts as an adhesive to stiffen the preform element and particularly to adhere the layers of the stack to each other. The binding agent can be a heat-activatable powder binder. The powder binder can be applied to the surface of the preform component before it is arranged in the cavity. After the shape-giving process, i.e., after establishing the vacuums, and after removing the vacuum bag from the lower mold, thermal energy or heat is applied to the preform component(s) and, hence, to the powder binder. Thereby, the binding agent is melted or softened up or fluidized and migrates and distributes over the material of the preform component(s), particularly between the fibers, and/or to several layers. A subsequent cooling of the powder binder causes a curing of the binder material such that the preform element is stiffened and particularly that the layers of the stack are adhered to each other.

The at least one vacuum bag can comprise a lower vacuum foil and an upper vacuum foil with the at least one preform component in between, wherein the lower vacuum foil and the upper vacuum foil are airtightly sealed to each other, wherein the upper vacuum foil is airtightly sealed to the upper mold. The vacuum foils are flexible and airtight such that sealing the vacuum foils to each other and/or sealing the upper vacuum foil to the upper mold creates a respective airtight area. The vacuum foils can be made of a plastic material. The vacuum foils are typically thin enough that their thicknesses do not appreciably contribute to the shape of the preform element. After the manufacturing process of the preform element, the vacuum foils can be removed.

While the lower mold surface can comprise a concave shape, preferably, the lower mold surface comprises a convex shape which is curved upwards. Regarding the cross-sectional plane of the lower mold perpendicular to its or to the longitudinal elongation of the preform element, the shape of the mold surface is bent upwards. The convex shape of the lower mold surface causes the positive effect that, when the at least one flexible preform component is arranged on the lower mold, the gravity or weight of this preform component leads to an even shape of the preform component without wrinkles which often occur when using concave mold surfaces, since parts of the preform component often slide towards the center of the concave mold surface, particularly because of steep angles, causing undesired wrinkles.

The lower mold can comprise a concave mold structure, wherein at least one removable module is arranged on the concave mold structure to constitute the convex lower mold surface. In this embodiment, the lower mold comprises a concave mold surface such that it can be basically used if a concave mold surface is required. However, if the convex mold surface of the lower mold is required, this can be realized by arranging the at least one removable module with a respective convex shape on the concave mold structure. Hence, the module is a component comprising an upper shape which constitutes the convex lower mold surface. The module can comprise supports which extend across the open concave mold surface of the lower mold. The supports can be variable in width such that the module can be arranged on several concave mold structures with different widths. The respective modular system reduces the number of required mold stations.

The binding agent can be activated after the upper mold and the at least one vacuum bag is lifted away from the lower mold. In this embodiment, the vacuums conserve the shape of the respective component(s) which constitutes the final preform element such that this shape retains when the upper mold is lifted away from the lower mold. Subsequently, the binding agent is activated to finally conserve the shape of the preform element. Since the activation of the binding agent requires thermal energy, the lower mold can consist of a material which does not withstand the respective activation temperature of the binding agent. Particularly, the lower mold can consist of foamed plastic or of wood.

In contrast to this, the upper mold can consist of a material which withstands the activation temperature needed for activating the binding agent, particularly of metal. For activating the binding agent, the upper mold can comprise the a heating means to induce heat or thermal energy to the vacuum bag. Another possibility is to use an oven for activating the binding agent, wherein vacuum bag is positioned within the oven, either together with or without the upper mold.

In an optional first concrete embodiment of the method according to the invention, the preform component or an upper stack constituting an outer preform element being an outer skin of the blade is arranged in an upper vacuum bag. The or another preform element or a lower stack constituting an inner preform element being an inner skin of the blade can be arranged in a lower vacuum bag. In this embodiment, the upper vacuum bag is arranged on the lower vacuum bag. Hence, the shape-giving process and particularly the activation of the binding agent can be executed simultaneously. It is also possible that the component(s) in the upper vacuum bag constitute the inner preform element and the component(s) in the lower vacuum bag constitute the outer preform element. Each vacuum bag can consist of a lower vacuum foil and an upper vacuum foil as it has been described above.

Next, a lower bag vacuum is established in the lower vacuum bag and an upper bag vacuum is established in the upper vacuum bag. Additionally, a lower holding vacuum is established between the lower vacuum bag and the upper vacuum bag and an upper holding vacuum is established between the upper vacuum bag and the upper mold surface. The upper mold and the vacuum bags which are held to the upper mold by the holding vacuums are lifted away from the lower mold. The lower holding vacuum is used to adapt the shape of the vacuum bags to each other and to hold the lower vacuum bag on the upper vacuum bag. The upper holding vacuum is used to adapt the shape of the upper vacuum bag to the shape of the upper mold surface and to hold the upper vacuum bag together with the lower vacuum bag on the upper mold surface. Hence, when lifting the upper mold away from the lower mold, the holding vacuums ensure that the vacuum bags are securely held on the upper mold. The lower vacuum bag is indirectly held to the upper mold by the lower vacuum bag. After lifting the upper mold and the vacuum bags away from the lower mold, the binding agent can be activated such that the manufactured preform elements fit to each other regarding their shapes.

If more than two preform elements are manufactured according to this embodiment, below the lower vacuum bag at least one further lower vacuum bag comprising a respective preform component or stack can be arranged, wherein between the lower vacuum bag and the further lower vacuum bag a further holding vacuum can be established. A further lower bag vacuum can be established in the further lower vacuum bag. Generally speaking, the at least one further lower vacuum bag, the lower vacuum bag and the upper vacuum bag can constitute a vacuum bag stack with a holding vacuum between two adjacent vacuum bags. In this embodiment, all vacuum bags are attached at least indirectly to the upper mold surface by the respective holding vacuums such that the vacuum bag stack can be lifted away from the lower mold by lifting the upper mold.

According to an optional second concrete embodiment of the method of the present invention, also several preform elements can be produced subsequently or simultaneously. The respective method comprises the following steps:
a) Arranging a stiff insert with a shape corresponding to the shape of an inner preform element being an inner skin of the blade on the lower mold surface,
b) Arranging the preform component or an upper stack constituting an outer preform element being an outer skin of the blade in an upper vacuum bag which is arranged on the insert,
c) Establishing an upper bag vacuum in the upper vacuum bag and an upper holding vacuum between the upper vacuum bag and the upper mold surface,
d) Lifting the upper mold and the upper vacuum bag which is held to the upper mold by the upper holding vacuum away from the lower mold,
e) Removing the insert from the lower mold surface,
f) Arranging the or another preform element or a lower stack constituting the inner preform element in a lower vacuum bag which is arranged on the lower mold surface,
g) Arranging the upper vacuum bag together with the upper mold on the lower vacuum bag,
h) Establishing a lower bag vacuum in the lower vacuum bag and a lower holding vacuum between the lower vacuum bag and the upper vacuum bag,
i) Lifting the upper mold and the vacuum bags away from the lower mold, wherein the lower vacuum bag is held to the upper vacuum bag by the lower holding vacuum.

It is also possible that the component(s) in the upper vacuum bag constitute the inner preform element and the component(s) in the lower vacuum bag constitute the outer preform element

Regarding step a), the stiff insert can be made of wood or a foamed plastic material or the like. The shape of the stiff insert equals the shape of the inner preform element and, hence, acts as a "dummy-component" for the inner preform element.

In step b), the component(s) constituting the outer preform element are arranged in the upper vacuum bag. Concretely, a lower vacuum foil of the upper vacuum bag can be arranged on the insert, the component(s) for the outer preform element are arranged on the lower vacuum foil, wherein an upper vacuum foil of the upper vacuum bag can be arranged on these component (s) .

Regarding step c), particularly after the vacuum foils of the upper vacuum bag have been sealed to each other and to the upper mold and the upper mold has been positioned on the upper vacuum bag, the vacuums in the upper vacuum bag and between the upper vacuum bag and the upper mold surface are established. While establishing the vacuums, the insert acts as a placeholder such that the shape of the component(s) within the upper vacuum bag building the outer preform element adapt to the shape of the insert and, hence, of the inner preform element.

Regarding step d), the upper mold and the upper vacuum bag is lifted away from the lower mold and from the insert. The upper mold and the upper vacuum bag can then be stored in a rack, particularly in a horizontal or a vertical position. The binding agent in the upper vacuum bag can be activated already after removing the upper mold from the lower mold.

Next, in step e), the insert is removed from the lower mold surface. As will be described below, in steps a) and b) a shaping element can be arranged between the insert and the upper vacuum bag. Hence, in step e), the insert and the shaping element can be removed from the lower mold surface.

Next, in step f), the component(s) which constitute the inner preform element are arranged on the lower mold surface together with the vacuum foils of the lower vacuum bag.

Next, in step g), the upper mold together with the upper vacuum bag can be retrieved from the rack and be arranged on the lower vacuum bag.

Next, in step h), the lower bag vacuum is created in the lower vacuum bag and a lower holding vacuum is established between the lower vacuum bag and the upper vacuum bag. During this step, the shape of the lower section of the upper vacuum bag can be still conserved by the respective vacuums or the already activated binding agent. Because of the further vacuums created in step h), the shape of the upper section of the lower vacuum bag fits to the shape of the lower section of the upper vacuum bag.

Next, in step i), the upper mold is lifted away from the lower mold together with both vacuum bags. After this, the binding agent in the vacuum bags can be activated.

Regarding these two concrete embodiments of the method according to the present invention, between the lower vacuum bag and the upper vacuum bag, and particularly between the insert and the upper vacuum bag, at least one stiff shaping element can be arranged, wherein the shape of the shaping element corresponds to the shape of a blade component arranged in contact with the preform elements in the blade, wherein the surface of the shaping element defines a respective contact surfaces between the preform elements and the blade component. The shaping element can consist of a foamed plastic material or of wood and can be manufactured by 3D-printing. The shape of the shaping element can correspond to the shape of the blade component being a spar cap or a beam or a component of a blade root or a core of the blade. The shaping element acts as a "dummy element", i.e., as an element which is a copy of the blade component. The shaping element acts as a placeholder for the blade component to ensure that the shapes of the preform elements fit to the shape of the blade component in the final blade which is in contact with and particularly sandwiched between the preform elements.

The present invention furthermore relates to a preform element for a blade for a wind turbine, manufactured according to the description above. All features and advantages of the method according to the present invention can be transferred to the preform element according to the present invention and vice versa.

The present invention furthermore relates for a blade for a wind turbine, comprising at least one preform element according to the foregoing paragraph. All features and advantages of the method and the preform element according to the present invention can be transferred to the blade according to the present invention and vice versa.

The present invention furthermore relates to a wind turbine, comprising at least one blade according to the foregoing paragraph. All features and advantages of the method, the preform element and the blade according to the present invention can be transferred to the wind turbine according to the present invention and vice versa.

The present invention furthermore relates to an upper mold, consisting of at least one vacuum establishing means or at least one interface for connecting the upper mold with at least one vacuum establishing means, wherein the upper mold is suitable to be used for the method according to the description above. All features and advantages of the method, the preform element, the blade and the wind turbine according to the present invention can be transferred to the upper mold according to the present invention and vice versa.

The present invention furthermore relates to a mold arrangement, consisting of at least one upper mold according to the foregoing paragraph and of at least one lower mold which is suitable to be used for the method according to the description above. All features and advantages of the method, the preform element, the blade, the wind turbine and the upper mold according to the present invention can be transferred to the mold arrangement according to the present invention and vice versa.

In a preferred embodiment of the mold arrangement according to the present invention, the upper mold can consist of a material, particularly of metal, which withstands an activation temperature needed for activating the binding agent, wherein the lower mold consists of a material, particularly of a foamed plastic or of wood, which does not withstand the activation temperature. As it has been already discussed above, the activation of the binding agent can be done after the upper mold together with the vacuum bag(s) has been lifted away from the lower mold. Hence, it is not necessary that the material of the lower mold withstands the activation temperature of the binding agent. Hence, the lower mold can be realized in a very simple and inexpensive way.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a view of an embodiment of a wind turbine ac-cording to the invention with three blades ac-cording to the invention, wherein each of the blades comprises several preform elements ac-cording to the invention,
- Fig. 2: a cross-sectional view of one of the blades of the wind turbine of fig. 1, wherein the cutting line is indicated by II - II in fig. 1, and
- Fig. 3 - 22: schematical depictions of the steps of manufacturing preform elements of the blade of fig. 2 and the respective blade to illustrate a first embodiment of the method according to the invention.

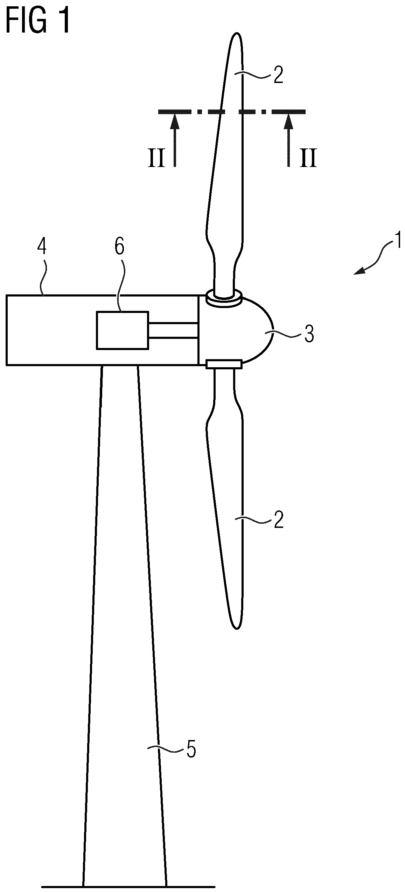

In fig. 1, a wind turbine 1 according to an embodiment of the present invention is shown. The wind turbine 1 comprises several, exemplarily three, blades 2 according to an embodiment of the present invention. The blades 2 are attached to a hub 3 of the wind turbine 1. The hub 3 is mounted on the front side of a nacelle 4 which is supported by a tower 5 and which houses a generator 6 for generating electrical energy from the wind-induced rotation of the blades 2 and the hub 3.

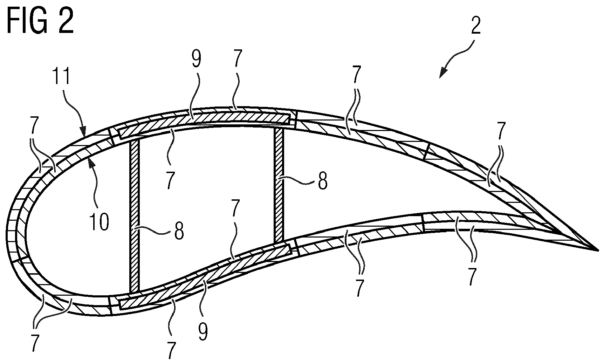

Fig. 2 shows a cross-sectional view of one of the blades 2, wherein the respective crossing line is indicated by the line II - II in fig. 1. A blade 2 comprises several preform elements 7 which realize the blade 2, concretely its outer or inner skin. The blade 2 comprises several sections, wherein in each section two preform elements 7 are consolidated. At one of the sections of the blade 2, where shear webs 8 are located, a blade component 9, namely a spar cap or a beam, is arranged or sandwiched between two stacked preform elements 7. When manufacturing the blade 2, it is a main task that the shapes of the preform elements 7 which are stacked upon each other, particularly with the beam 9 sandwiched in between, fit together as good as possible.

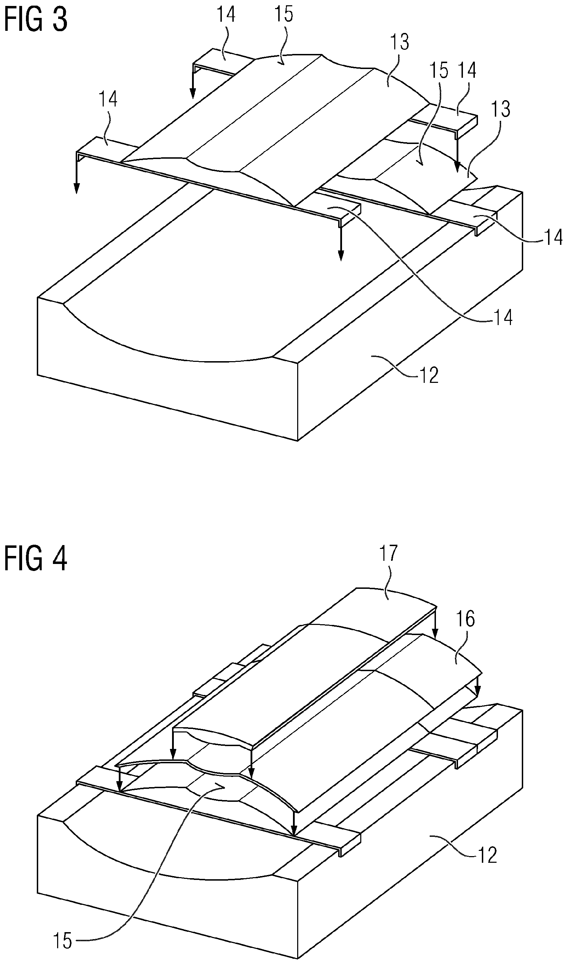

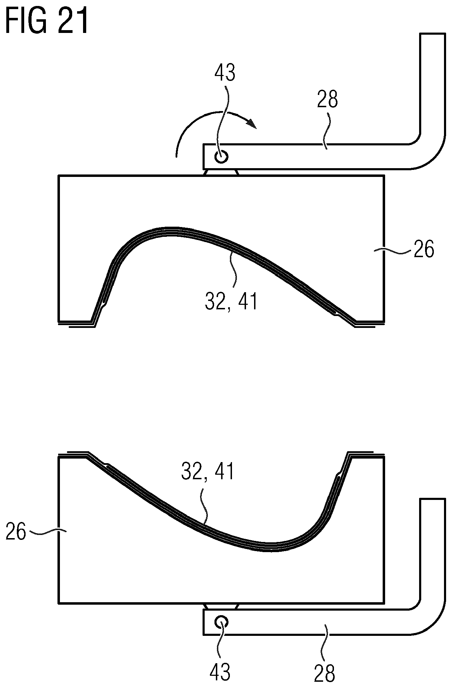

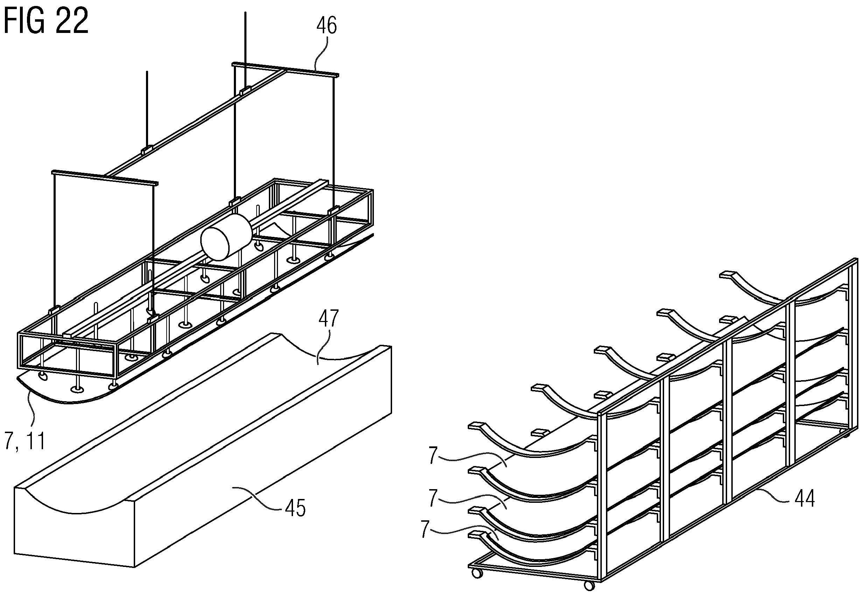

Next, an embodiment of the manufacturing process according to the present invention, namely to manufacture the uppermost pair of preform elements 7 of fig. 2 with the beam 9 in between, will be described with the help of figures 3 to 20. Subsequently, the manufacturing process of the final blade 2 using the preform elements 7 will be described with the help of figures 21 and 22.

Referring to fig. 3, a lower mold 12 with a concave mold structure is provided. Several removable modules 13 are arranged on the concave mold structure to realize a convex lower mold surface 15 of the lower mold 12. Each of the modules 13 comprises supports 14 which extend across the open concave mold surface. The supports 14 are variable in width, e.g., telescopically extendable, such that the modules 13 can be arranged on several lower molds 12 with different widths. Using the modules 13 allows the lower mold 12 to be changed from the concave to the convex shape.

Next, referring to fig. 4, a stiff insert 16 with a shape corresponding to the shape of the inner preform element 7 being the inner skin 10 of the blade 2 is arranged on the lower mold surface 15. Additionally, on the insert 16, a stiff shaping element 17 is positioned, wherein the shape of the shaping element 17 corresponds to the shape of the blade component 9, i.e., of the beam or spar cap, respectively. Alternatively, the shape of the shaping element 17 can correspond to the shape of the blade component 9 being a component of a blade root or a core of the blade 2.

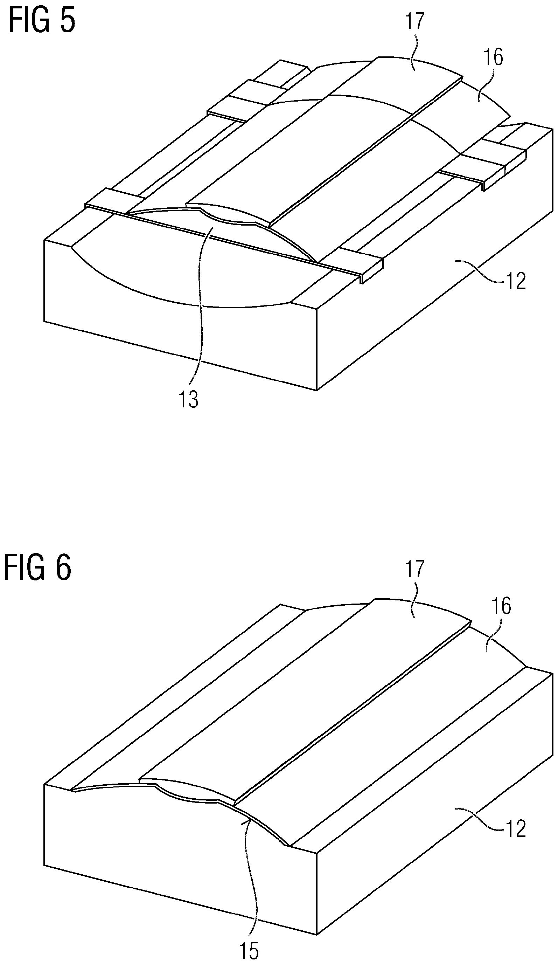

The resulting setting composed by the lower mold 12, the modules 13, the insert 16 and the shaping element 17
is shown in fig. 5. However, instead of the lower mold 12 as shown in fig. 5 together with the modules 13, as a first alternative, a lower mold 12 comprising a convex mold structure realizing the convex lower mold surface 15 can be used. A respective lower mold 12 together with the components 16, 17 is shown in fig. 6. As a second alternative, the lower mold 12 can comprise a flexible mold surface, wherein the concrete shape of the lower mold surface 15 can be adjusted for the current purpose.

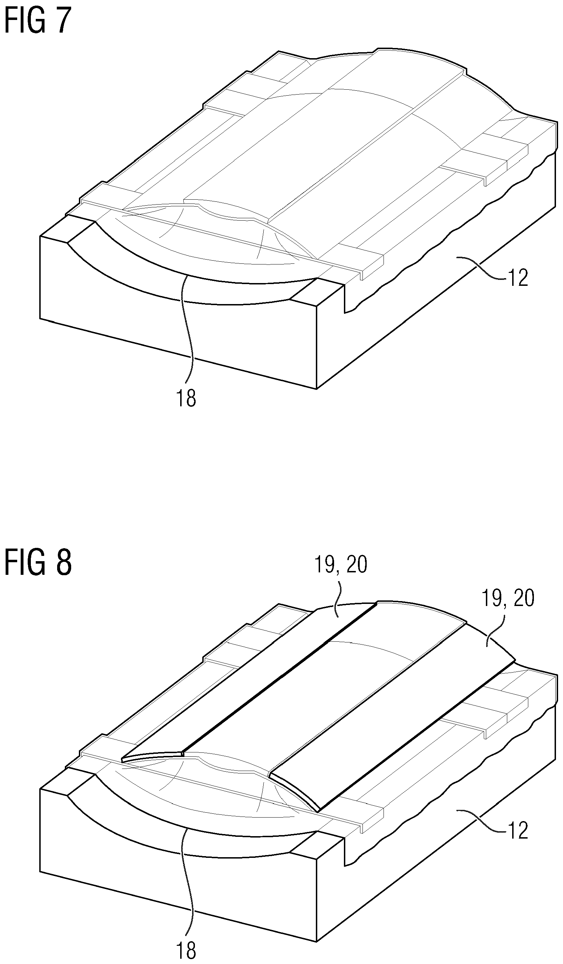

Referring figures 5 and 7, the upper surfaces of the insert 16 and the shaping element 17 are cleaned before a lower vacuum foil 18 of plastic is positioned on the lower mold surface 15 or, more precisely, on the components 16, 17.

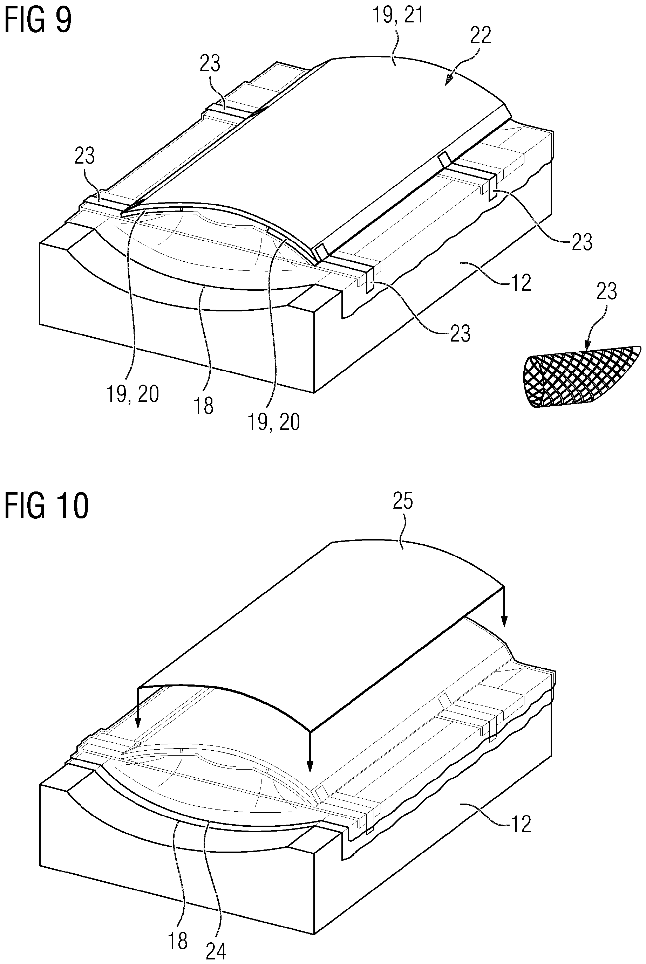

Next, as it is shown in figures 8 and 9, several preform components 19 which realize several layers of an upper stack 22 are arranged on the lower vacuum foil 18. Concretely, a lower preform component 19 constitutes a two-part rigid layer 20 consisting of two elements made of balsa wood or a foamed plastic material. These elements are arranged on top of the lower vacuum foil 18 and laterally on both sides of the shaping element 17 (see fig. 8). An upper preform component 19 comprises a mat-like and flexible fiber sheet 21 being a fabric with glass-, carbon- and/or aramid fibers and is located on the setting shown in fig. 8 to achieve the setting shown in fig. 9.

The fiber sheet 21 comprises a curable binding agent, namely a heat-meltable powder binder, which will be activated later during the manufacturing process. The activated binding agent ensures that the fibers of the fiber sheet 21 and that the elements of the rigid layer 20 and the fiber sheet 21 are adhered to each other. Having the activated binding agent, the upper stack 22 realizes the stiff and rigid preform element 7.

Referring to fig. 9 again, several airpath elements 23 are arranged on the upper stack 22 and on lateral sections of the lower vacuum foil 18. On the right side of fig. 9, an enlarged and detailed view of a part of one of the airpath elements 23 is shown. The tube- and net-like airpath element 23 consists of a porous material to allow air to pass through. Hence, the airpath element 23 allows air to migrate away from the upper stack 22 to evacuate a respective vacuum in this section which will be described later in detail.

Next, referring to fig. 10, an upper vacuum foil 24 of plastic is arranged on the upper stack 22 and an air transportation layer 25 is located on top of the upper vacuum foil 24. The air transportation layer 25 consists of a porous material to allow air to pass through such that air can be removed uniformly from the respective area later, particularly to prevent the formation of air-islands there.

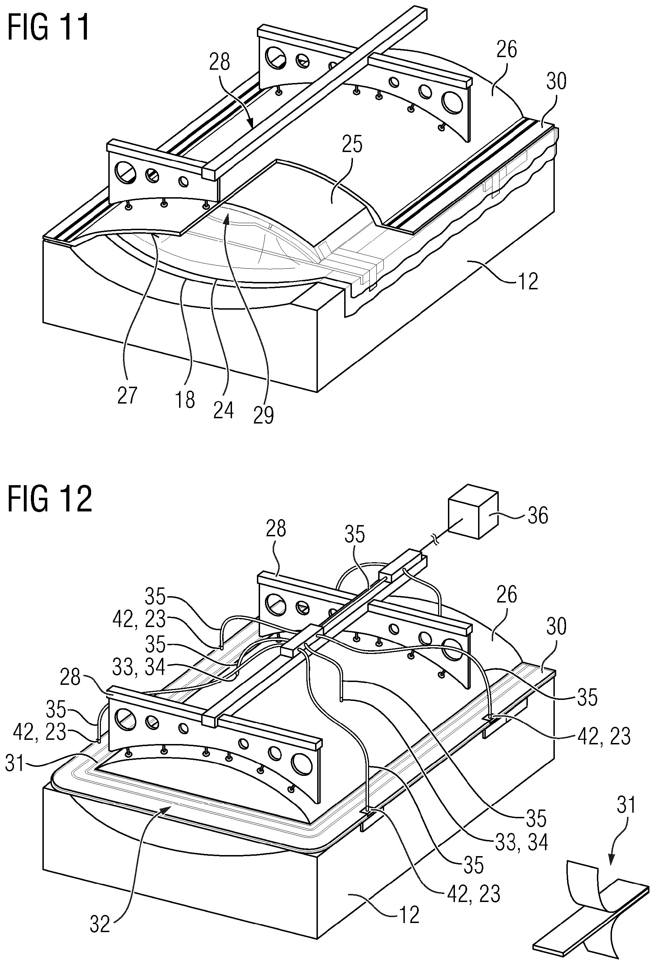

Next, referring to fig. 11, an upper mold 26 with an upper mold surface 27 is arranged on top of the upper stack 22. The mold surfaces 15, 27 constitute a shape-giving cavity 29 for the upper stack 22 and the respective preform element 7.

Hence the shape of the upper stack 22 adapts to the shapes of the mold surfaces 15, 27. Concretely, the upper mold 26 is lowered on the upper stack 22 from above by a respective crane which is not shown in the figures. The upper mold 26 is attached to a yoke 28 being a mechanical interface between the upper mold 26 and the crane. For a better visibility, the lower right section of the upper mold 26 is omitted and not shown in fig. 11.

Next, referring to fig. 12, the lateral edges of the vacuum foils 18, 24 are flipped around a lateral flange 30 of the upper mold 26 and are sealed to each other and to the upper mold 26 by a sealing means 31, e.g., by a butyl band which is shown in more detail on the right side of fig. 12. The sealing means 31 ensure that the space between the vacuum foils 18, 24 where the upper stack 22 is arranged is airtightly sealed. Hence the vacuum foils 18, 24 realize an upper vacuum bag 32 for the upper stack 22. Moreover, the sealing means 31 ensure that the space between the upper vacuum foil 24 and the upper mold surface 27 is also airtightly sealed.

Referring to fig. 12 again, the upper mold 26 comprises interfaces 33 for connecting the upper mold with a vacuum establishing means 36 which is a vacuum pump. The interfaces 33 are stubs 34 located on the upper surface of the upper mold 26 leading to the area directly below the upper mold surface 29. Each of the interfaces 33 is connected to the vacuum establishing means 36 by a hose 35. Additionally, the outer end sections of the airpath elements 23 realize connecting points 42 for hoses 35 which connect these connecting points 42 with the vacuum establishing means 36.

Next, vacuums are established by the vacuum establishing means 36 such that an upper bag vacuum is created in the upper vacuum bag 32 via the airpath elements 23 and an upper holding vacuum is created between the upper vacuum bag 32 and the upper mold surface 27 via the interfaces 33. On the one hand, the respective vacuums cause the upper stack 22 to adopt the final shape of the respective preform element 7 which is defined by the shape of the cavity 29. On the other hand, the upper vacuum bag 32 is attached to the upper mold 26 by the holding vacuum. When establishing the vacuums, the height of the upper stack 22 can decrease which might be compensated by pressing the upper mold 26 onto the lower mold 12 from above and closing an initial gap between the molds 12, 26.

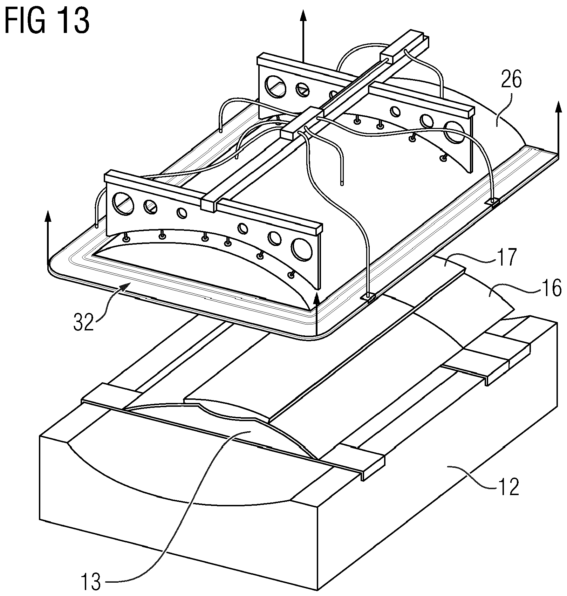

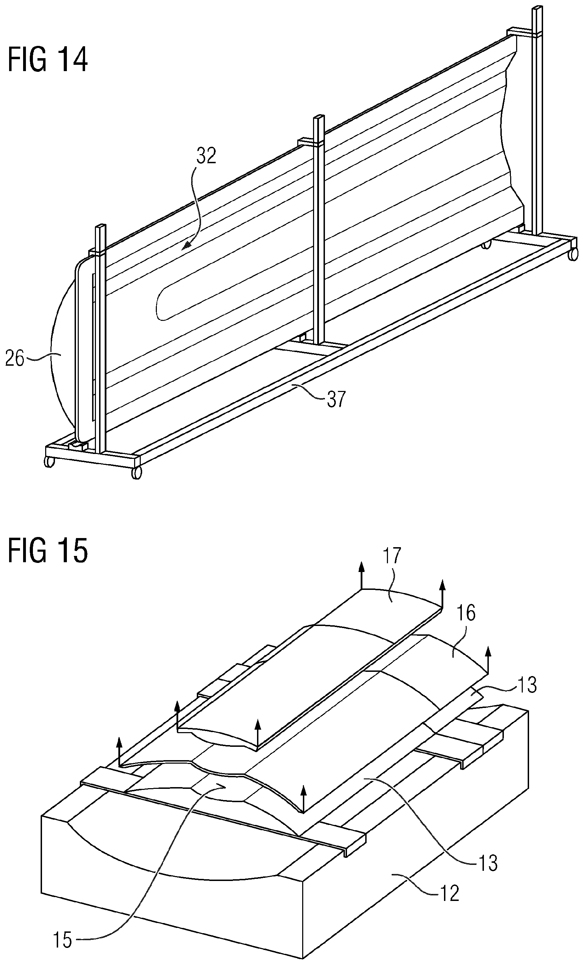

Next, referring to fig. 13, the upper mold 26 and the upper vacuum bag 32 are lifted away from the lower mold 12. To hold the upper vacuum bag 32 on the upper mold 26, the holding vacuum can be actively maintained during this step by the vacuum establishing means 36. However, the initial holding vacuum can be sufficient to attach these components to each other while no further pumping is required. The arrangement comprising the upper mold 26 and the upper vacuum bag 32 is then placed in a rack 37 in a horizontal or a vertical position, wherein the vertical position is shown in fig. 14. Preferably, the upper mold 26 and the upper vacuum bag 32 is arranged in the vertical position in the rack 37, since the horizontal space required for storing the upper mold 26 and the upper vacuum bag 32 is less compared to the case storing these components horizontally.

Next, referring to fig. 15, the insert 16 and the shaping element 17 are removed from the lower mold 12.

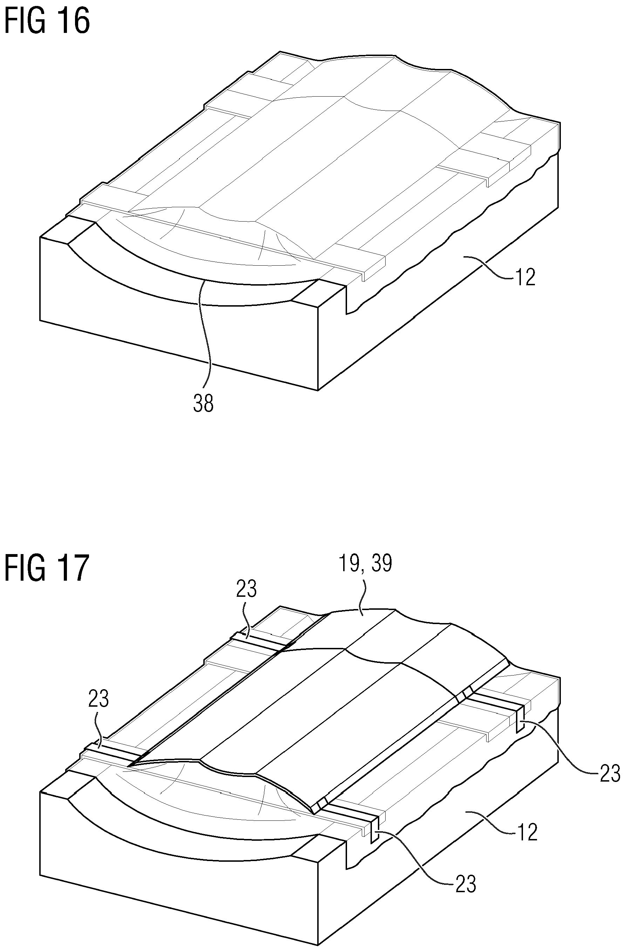

Next, referring to fig. 16, a lower vacuum foil 38 made of plastic is placed on top of the lower mold surface 15. On top of the lower vacuum foil 38, a preform component 19, namely a fiber sheet 39 with the binding agent, to constitute the inner preform element is arranged. Next, airpath elements 23 are arranged on the preform component 19 and on lateral sections of the lower vacuum foil 38.

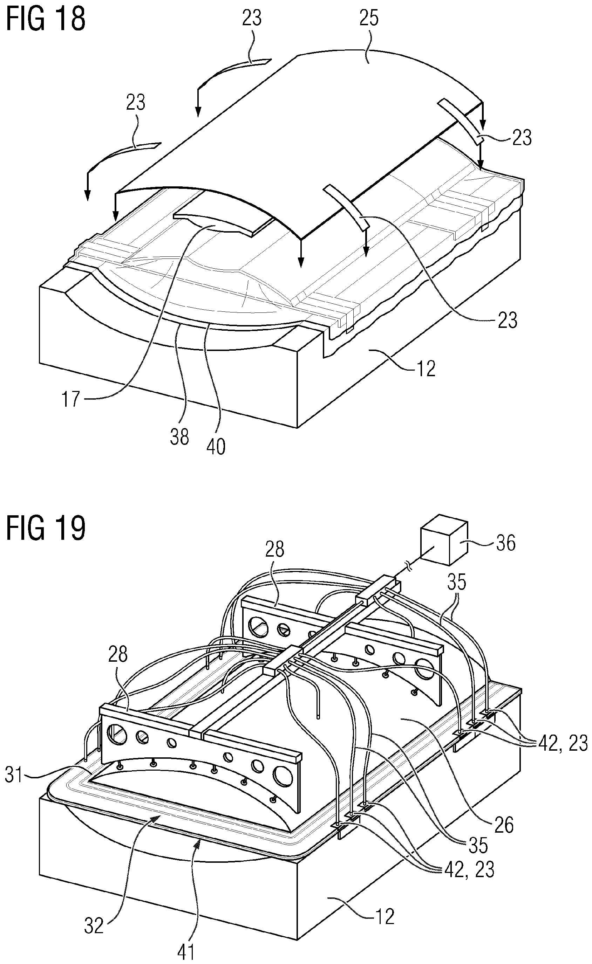

Next, referring to fig. 18, an upper vacuum foil 40 made of plastic is arranged on the fiber sheet 39 and the shaping element 17 is arranged on the upper vacuum foil 40. On the shaping element 17 and the upper vacuum foil 40, airpath elements 23 and an air breather layer 25 are arranged.

Next, referring to fig. 19, the upper mold 26 and the upper vacuum bag 32 is retrieved from the rack 37 and placed on top of the setup of fig. 18. The lateral edges of the vacuum foils 38, 40 are flipped around the flange 30 of the upper mold 26 and are sealed to each other and to the upper mold 26 by the sealing means 31. The sealing means 31 ensure that the space between the vacuum foils 38, 40 where the fiber sheet 39 is arranged is airtightly sealed. Hence, the vacuum foils 38, 40 constitute a lower vacuum bag 41 for the preform component 19, 39. Moreover, the sealing means 31 ensure that the space between the vacuum bags 32, 41 is airtightly sealed.

End sections of the airpath elements 23 constitute connecting points 42 for connecting these sealed areas with the vacuum establishing means 36 by hoses 35. Next, a lower bag vacuum is established in the lower vacuum bag 41 and a lower holding vacuum is established between the lower vacuum bag 41 and the upper vacuum bag 32 by the vacuum establishing means 36. After this, a vacuum is present in each of both vacuum bags 32, 41, in the space between the vacuum bags 32, 41 and in the space between the upper vacuum bag 32 and the upper mold surface 27. Hence, the shape of the components in the vacuum bags 32, 41 constituting the inner skin 10 and the outer skin 11 fits to each other, fits to the shape of the mold surfaces 15, 27 and fits to the shape of the shaping element 17 which is sandwiched between the preform elements 7.

Next, the upper mold 26 is lifted away together with the vacuum bags 32, 41 by the yoke 28 and the crane. After this, the binding agent in the components in the vacuum bags 32, 41 is activated to conserve the final shape of the preform elements 7. Concretely, the upper mold 26 and the vacuum bags 32, 41 are heated, e.g., by a heating means of the upper mold 26 or by an oven, to melt the binding agent being a powder binder.

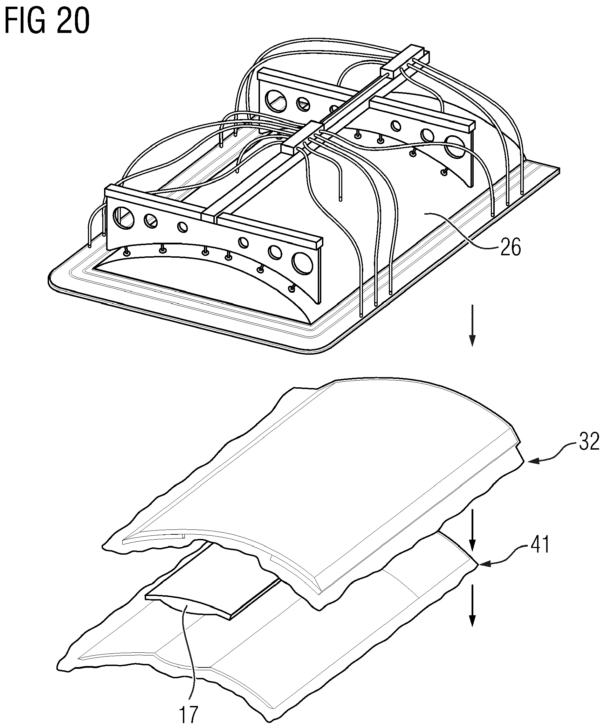

Next, referring to fig. 20, the heated components are cooled down before the vacuums are released and the vacuum bags 32, 41 with the finished preform elements 7 are removed from the upper mold 26. The vacuum bags 32, 41 are then removed from the preform elements 7 by, e.g., cutting the respective vacuum foils 18, 24 38, 40 away from the finished preform elements 7.

As it might be necessary that the upper mold 26 has to be rotated about its longitudinal direction, e.g., for bringing it into the upright position as shown in fig. 14 or for bringing the finished preform elements 7 into a position required for subsequent manufacturing process of the blade 2, the upper mold 26 can be connected with the yoke 28 by pivoting means 43 being particularly an electromotor. An example for a respective rotating process where the upper mold 26 is rotated about an angle of 180°, is shown in fig. 21.

Next, another possible embodiment of the method according the present invention will be described. Basically, this method is the same as the method described above with the help of figures 3 to 20, apart from the following aspects.

Referring to fig. 4, instead of the insert 16, the lower vacuum bag 41 with the preform component 19 or a lower stack consisting of several preform components 19 is arranged on the lower mold surface 15 as it has been described with the help of figures 16 to 18. Next, the shaping element 17 is arranged on the lower vacuum bag 41. Next, the steps which have been explained with the help of figures 7 to 13 are executed to realize the upper vacuum bag 32 with the upper stack 22. After this step, the upper mold 26 is lifted away from the lower mold 12 together with the vacuum bags 32, 41 as described with the help of fig. 19. During this, the bag vacuums and the holding vacuums are established. Finally, the binding agent is activated and the preform elements 7 are finished. This embodiment of the method according to the present invention is particularly applicable if only one preform component 19 or the lower stack with only a few, particularly not more than three, preform components 19 are arranged in the lower vacuum bag 41.

With reference to fig. 22, a subsequent method for manufacturing a blade 2 using the preform elements 7 which have been manufactured as explained above and preform elements 7 which have been also manufactured this way but using a concave shaped lower mold surface 15 is described. While the preform elements 7 are stored in a respective storing rack 44, a concave blade mold half shell 45 is provided. The preform elements 7 manufactured by using the concave shaped lower mold surface 15 are arranged on top of each other on the blade mold half shell 45 using a transportation- or lifting means 46. Although not shown in fig. 22, further preform elements 7 are arranged adjacently to the shown preform element 7 on the surface of the blade mold half shell 45. Moreover, the blade component 9 is arranged between two of the preform elements 7. The preform elements 7 realize the inner skin 10 and the outer skin 11 of the blade 2.

Another concave blade mold half shell which is not shown in fig. 22 is provided, wherein the preform elements 7 which have been manufactured as explained above are arranged on the other blade mold half shell with the blade component 9 in between. Further preform elements 7 are arranged adjacently to these preform elements 7. The blade mold half shells are closed, resin is infused and cured and the blade 2 is finished.

Although the present invention has been described in detail with reference to the preferred embodiment, the present invention is not limited by the disclosed examples from which the skilled person is able to derive other variations without departing from the scope of the invention.

## Claims

1. Method for manufacturing at least one preform element (7) for a blade (2) for a wind turbine (1), wherein a mat-like preform component (19) with a curable binding agent or a stack (22) with at least one mat-like preform component (19) with a curable binding agent is arranged in at least one vacuum bag (32, 41) which is arranged in a shape-giving cavity (29), wherein the cavity (29) is constituted by a lower mold surface (15) of a lower mold (12) and an upper mold surface (27) of an upper mold (26), wherein a bag vacuum is established in the vacuum bag (32, 41) and a holding vacuum is established between the vacuum bag (32, 41) and the upper mold surface (27), wherein the upper mold (26) and the at least one vacuum bag (32, 41) which is held to the upper mold (26) by the holding vacuum are lifted away from the lower mold (12), wherein the at least one preform component (19) is cured by activating the binding agent to conserve its shape.

2. Method according to claim 1, **characterized in that** the at least one vacuum bag (32, 41) comprises a lower vacuum foil (18, 38) and an upper vacuum foil (24, 40) with the at least one preform component (19) in between, wherein the lower vacuum foil (18, 38) and the upper vacuum foil (24, 40) are airtightly sealed to each other, wherein the upper vacuum foil (24, 40) is airtightly sealed to the upper mold (26).

3. Method according to claim 1 or 2, **characterized in that** the lower mold surface (15) comprises a convex shape which is curved upwards.

4. Method according to claim 3, **characterized in that** the lower mold (12) comprises a concave mold structure, wherein at least one removable module (13) is arranged on the concave mold structure to constitute the convex lower mold surface (15).

5. Method according to one of the preceding claims, **characterized in that** the binding agent is activated after the upper mold (26) and the at least one vacuum bag (32, 41) is lifted away from the lower mold (12).

6. Method according to one of the preceding claims, **characterized in that** the preform component (19) or an upper stack (22) constituting an outer preform element being an outer skin (11) of the blade (2) is arranged in an upper vacuum bag (32), wherein the or another preform element (19) or a lower stack constituting an inner preform element being an inner skin (10) of the blade (2) is arranged in a lower vacuum bag (41), wherein the upper vacuum bag (32) is arranged on the lower vacuum bag (41), wherein a lower bag vacuum is established in the lower vacuum bag (41) and an upper bag vacuum is established in the upper vacuum bag (32), wherein a lower holding vacuum is established between the lower vacuum bag (41) and the upper vacuum bag (32) and an upper holding vacuum is established between the upper vacuum bag (32) and the upper mold surface (27), wherein the upper mold (26) and the vacuum bags (32, 41) which are held to the upper mold (26) by the holding vacuums are lifted away from the lower mold (12).

7. Method according to one of the claims 1 to 5, **characterized in that** the method comprises the following steps:
a) Arranging a stiff insert (16) with a shape corresponding to the shape of an inner preform element being an inner skin (10) of the blade (2) on the lower mold surface (15),
b) Arranging the preform component (19) or an upper stack (22) constituting an outer preform element being an outer skin (11) of the blade (2) in an upper vacuum bag (32) which is arranged on the insert (16),
c) Establishing an upper bag vacuum in the upper vacuum bag (32) and an upper holding vacuum between the upper vacuum bag (32) and the upper mold surface (27),
d) Lifting the upper mold (26) and the upper vacuum bag (32) which is held to the upper mold (26) by the upper holding vacuum away from the lower mold (12),
e) Removing the insert (16) from the lower mold surface (15),
f) Arranging the or another preform element (19) or a lower stack constituting the inner preform element in a lower vacuum bag (41) which is arranged on the lower mold surface (15),
g) Arranging the upper vacuum bag (32) together with the upper mold (26) on the lower vacuum bag (41),
h) Establishing a lower bag vacuum in the lower vacuum bag (41) and a lower holding vacuum between the lower vacuum bag (41) and the upper vacuum bag (32),
i) Lifting the upper mold (26) and the vacuum bags (32, 41) away from the lower mold (12), wherein the lower vacuum bag (41) is held to the upper vacuum bag (41) by the lower holding vacuum.

8. Method according to claim 6 or 7, **characterized in that** between the lower vacuum bag (41) and the upper vacuum bag (32), and particularly between the insert (16) and the upper vacuum bag (32), at least one stiff shaping element (17) is arranged, wherein the shape of the shaping element (17) corresponds to the shape of a blade component (9) arranged in contact with the preform elements (7) in the blade (2), wherein the surface of the shaping element (17) defines a respective contact surfaces between the preform elements (7) and the blade component (9).

9. Method according to claim 8, **characterized in that** the shape of the shaping element (17) corresponds to the shape of the blade component (9) being a spar cap or a beam or a component of a blade root or a core of the blade (2).

10. Preform element for a blade (2) for a wind turbine (1), manufactured by the method according to one of the preceding claims.

11. Blade for a wind turbine, comprising at least one preform element (7) according to claim 10.

12. Wind turbine, comprising at least one blade (2) according to claim 11.

13. Upper mold, consisting of at least one vacuum establishing means (36) or at least one interface (33) for connecting the upper mold (26) with at least one vacuum establishing means (36), wherein the upper mold (26) is suitable to be used for the method according to one of the claims 1 to 9.

14. Mold arrangement, consisting of at least one upper mold (26) according to claim 13 and of at least one lower mold (12) which is suitable to be used for the method according to one of claims 1 to 9.

15. Mold arrangement according to claim 14, **characterized in that** the upper mold (26) consists of a material, particularly of metal, which withstands an activation temperature needed for activating the binding agent, wherein the lower mold (12) consists of a material, particularly of a foamed plastic or of wood, which does not withstand the activation temperature.
